# FASCICULE DE BREVET EUROPEEN

(11) **EP 0 432 014 B1**
(45) Date de publication et mention de la délivrance du brevet: **05.04.1995**
(21) Numéro de dépôt: 90403370.1
(22) Date de dépôt: 28.11.1990
(51) Int. Cl.: H04N 5/33, H04N 5/262, H04N 5/335

(54) **Système optoélectronique d'aide aux missions aériennes d'attaque et de navigation**
Optoelektronisches Hilfssystem für die Flugnavigation und Luftangriffsaufträge
Optoelectronic assistance system for air-raid missions and navigation

(30) Priorité: 01.12.1989 FR 8915890
(43) Date de publication de la demande: 12.06.1991
(73) Titulaire: THOMSON-CSF, 75008 Paris (FR)
(72) Inventeur: Manelphe, Christophe, F-92045 Paris la Défense (FR)
(74) Mandataire: Lincot, Georges

(56) Documents cités:
- EP-A- 0 342 419
- EP-A- 0 383 113
- DE-A- 3 146 552
- US-A- 4 282 550

## Description

L'invention concerne un système optoélectronique d'aide aux missions aériennes d'attaque et de navigation, destiné a être porté par un avion, un hélicoptère, ou un engin volant piloté à distance.

Pour remplir sa mission le pilote d'un aéronef a essentiellement besoin (et ce de jour comme de nuit ou par mauvaises conditions météorologiques) :
- de la connaissance du paysage frontal (fonction pilotage) ;
- de la localisation spatiale précise d'éléments remarquables du paysage), point initial de la conduite de tir ou cible (fonction attaque/reconnaissance).

Il est ainsi possible de distinguer plusieurs types de porteurs en fonction de leur aptitude à remplir chacune de ces tâches au travers des systèmes optoélectroniques qu'ils incluent.

La majorité des porteurs sont équipés d'équipements optoélectroniques rudimentaires voire même inexistants si l'avion est ancien. Certains disposent d'un imageur infrarouge grand champ principalement affecté à la fonction pilotage mais qui ne peut apporter qu'une aide limitée pour les fonctions navigation et attaque (pas de connaissance précise de la distance avion-but). D'autres disposent seulement d'un télémètre leur permettant d'apprécier cette distance mais dont le pointage fin est impossible de nuit ou par mauvaises conditions météorologiques.

Un nombre limité de porteurs affectés à des missions sophistiquées disposent, quant à eux, de systèmes complexes généralement contenus dans deux nacelles en emport :
- un élément dit "de navigation" comportant au moins un imageur grand champ spécialisé pour la fonction pilotage ;
- un élément dit "d'attaque" comportant un imageur petit champ couplé à un télémètre laser selon une direction de pointage variable dans tout l'espace, spécifiquement orienté vers les missions d'attaques par armements guidés.

Ces ensembles permettent, par leur association, de disposer de toutes les données nécessaires à la mission mais ne se justifient de par leurs coûts et leurs encombrements que dans le cadre de missions très spécifiques impliquant l'emploi d'armement guidé laser ou de missiles à imagerie.

L'invention, ici décrite, concerne tous les porteurs. De jour comme de nuit ou par mauvaises conditions météorologiques, elle a pour but d'améliorer significativement la précision de leur navigation ou de toutes autres parties de leur mission pouvant s'y afférer (reconnaissance, tirs de munitions à guidage autonome) et d'augmenter la précision du tir d'armements non guidés (canon, roquettes, bombes conventionnelles) s'ils en utilisent.

Il est connu dans l'état de la technique, la demande de brevet EP-A-0383113 désignant les Etats DE, ES, GB, NL et SE et qui décrit un système d'aide comportant essentiellement une caméra infrarouge à grand champ et à distance focale fixe, et un processeur d'image jouant le rôle d'un zoom pour obtenir une image à petit champ, extraite de l'image à grand champ, avec un grandissement réglable et avec une position réglable à l'intérieur de l'image à grand champ. Ce système est plus simple que les systèmes classiques utilisés pour la désignation de cible par laser, puisqu'il ne comporte pas de zoom optique ni de dispositif de pointage à grand débattement. Sa réalisation est donc moins coûteuse. Il peut être intégré à l'intérieur de la carlingue d'un avion et n'occupe donc pas de point d'accrochage sous l'avion. Il permet de mesurer avec précision le site et le gisement d'un point d'intérêt pour la navigation. Mais il ne permet pas d'effectuer des tirs précis.

L'invention est définie, selon un premier jeu de revendications concernant les Etats DE, ES, GB, NL et SE, par un système optoélectronique d'aide aux missions aériennes d'attaque et de navigation, comportant :
- une caméra infrarouge à grand champ et à distance focale fixe ;
- des premiers moyens de visualisation pour afficher une image à grand champ ;
- des moyens de traitement d'images comportant des moyens pour fournir un signal représentant une image à petit champ, qui est une portion de l'image à grand champ, avec un grandissement réglable et une position réglable à l'intérieur de l'image à grand champ ;
- des seconds moyens de visualisation pour afficher l'image à petit champ ;

caractérisé en ce que sur l'image grand champ est superposé un réticule mobile dont la position est réglable par les moyens de traitement d'image et est centrée sur l'image petit champ, et en ce que le centre de l'image petit champ indique la direction de la ligne de visée d'un télémètre à laser.

Selon un second jeu de revendications concernant les Etats BE et IT, l'invention est définie par un système optoélectronique d'aide aux missions aériennes d'attaque et de navigation, comportant :
- une caméra infrarouge à grand champ et à distance focale fixe ;
- des premiers moyens de visualisation pour afficher une image à grand champ ;

caractérisé en ce qu'il comporte en outre :
- des moyens de traitement d'images comportant des moyens pour fournir un signal représentant une image à petit champ, qui est une portion de l'image à grand champ, avec un grandissement réglable et une position réglable à l'intérieur de l'image à grand champ ;
- des moyens pour rég]er manuellement le grandissement et la position ;
- des seconds moyens de visualisation pour afficher l'image à petit champ.

Selon une autre caractéristique, le système selon l'invention comporte un télémètre à laser, associé à un dispositif de pointage ayant un faible débattement correspondant à l'angle solide du champ de la caméra, et dont la ligne de visée est asservie pour être pointée sur un point d'intérêt qui est vu au centre de l'image à petit champ. Le système permet alors de mesurer la distance de ce point d'intérêt, en plus du site et de gisement, de jour ou de nuit.

L'invention sera mieux comprise et d'autres détails apparaîtront à l'aide de la description ci-dessous et des figures l'accompagnant :
- la figure 1 représente schématiquement un exemple de réalisation du système selon l'invention, intégré dans la carlingue d'un avion ;
- la figure 2 représente le schéma synoptique de cet exemple de réalisation.

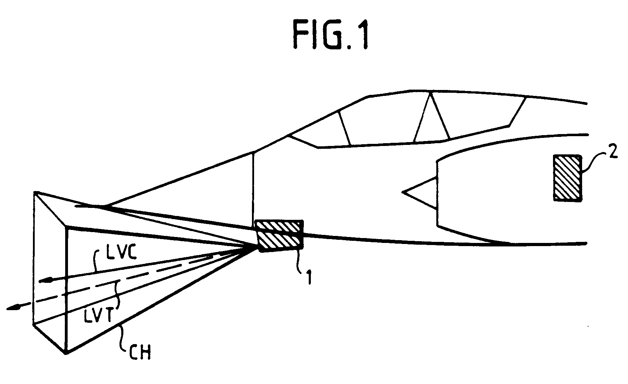

La figure 1 représente un exemple de réalisation qui comporte essentiellement : un coffret optoélectronique 1 situé en dessous du nez de l'avion, avec un ou deux hublots émergeant au-dessous de l'avion ; et un coffret électronique 2 logé dans la carlingue, en arrière du cokpit. Le coffret 1 contient une caméra infrarouge ayant un grand champ noté CH, et ayant une ligne de visée, notée LVC, dirigée fixement vers l'avant de l'avion avec une inclinaison de quelques degrés. Le champ de cette caméra est de l'ordre de 30° en diagonale. Le coffret 1 comporte en outre un télémètre à laser dont la ligne de visée, notée LVT, est orientable dans l'ensemble du champ CH de la caméra, mais qui n'est pas orientable en dessous de l'avion ou vers l'arrière de l'avion.

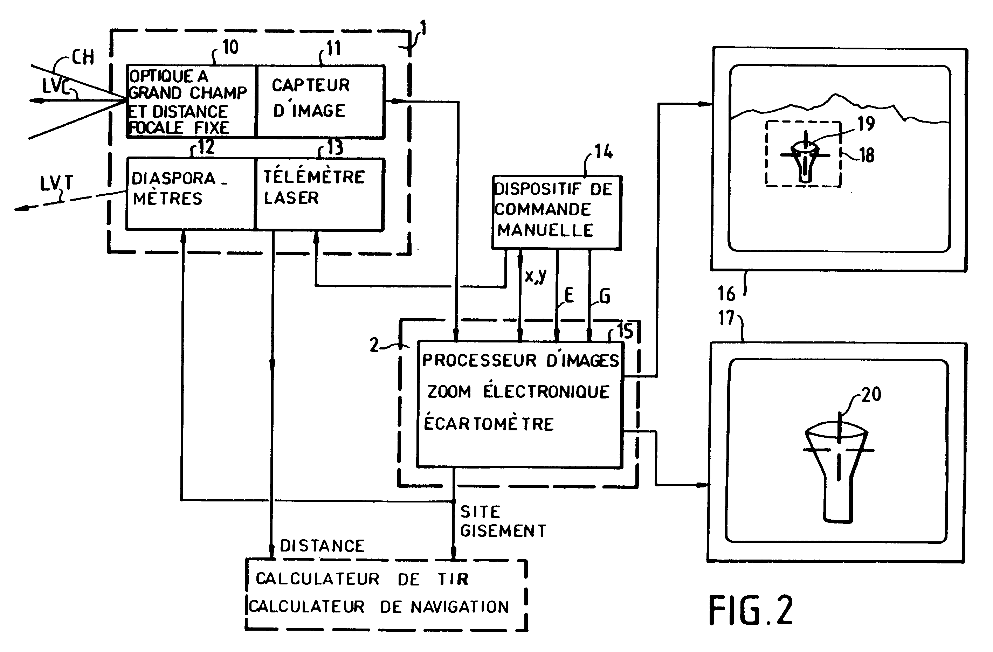

La figure 2 représente le schéma synoptique de cet exemple de réalisation du système selon l'invention. Le coffret 1 comporte une caméra infrarouge constituée d'une optique 10 à grand champ et à distance focale fixe, et d'un capteur d'images, 11, à grande résolution, constitué par exemple d'un capteur matriciel à transfert de charge ayant 512x512 cellules. La caméra pourrait aussi être constituée d'une barrette de cellules photosensibles et d'un dispositif de balayage optomécanique.

Le coffret 1 comporte aussi un télèmètre à laser 13 associé à deux diasporamètres 12 qui permettent de dévier la ligne de visée LVT. Les diasporamètres 12 sont des dispositifs classiques, comportant deux prismes tournant. Ils permettent de réaliser un pointage à faible débattement, mais avec des moyens beaucoup plus simples et moins encombrants que ceux utilisés dans les dispositifs de pointage à grand débattement que comportent les systèmes classiques de désignation de cible par laser.

La vole optique de la caméra infrarouge et la voie optique du télémètre laser peuvent être parallèles, avec deux hublots séparés, ou bien peuvent être mélangées par des moyens optiques classiques, afin d'utiliser un hublot unique. La caméra ayant un grand champ, le hublot peut être de petite dimension, pour une sensibilité donnée. Par conséquent, le hublot dépasse peu de la carlingue et provoque peu de perturbations aérodynamiques.

Le coffret électronique 2 comporte essentiellement un processeur d'images 15. Le système comporte en outre un dispositif de commande manuelle 14, et deux moniteurs de télévision 16 et 17. Le moniteur 16 affiche une image à grand champ, qui correspond à une image analysée par le capteur d'images 11 de la caméra. Sur cette image est superposé un réticule mobile 19 dont la position est réglable au moyen du dispositif 14 de commande manuelle. Le moniteur 17 affiche une image à petit champ qui correspond à une portion 18 de l'image à grand champ, cette portion 18 étant centrée sur le réticule 19. Au centre de l'image à petit champ, affichée sur le moniteur 17, un réticule fixe 20 indique le centre de l'image à petit champ et indique la direction de la ligne de visée LVT du télémètre à laser.

L'image grand champ représente tout le secteur frontal survolé, avec une ligne de visée fixe parfaitement harmonisée à l'avion, ce qui autorise la projection de cette image, à l'échelle 1 en superposition à la scène, au moyen d'un viseur électronique multimode à tête haute. L'image à petit champ peut être présentée sur un moniteur à tête moyenne ou à tête basse.

Le dispositif de commande manuelle, 14, possède une sortie reliée à une entrée du processeur d'images 15, pour lui fournir des coordonnées (x, y) définissant la position du réticule mobile 19 à l'intérieur de l'image à grand champ.

Une sortie du capteur d'image 11 est reliée à une entrée du processeur 15. Deux sorties du processeur 15 sont reliées respectivement à des entrées des moniteurs 16 et 17, et leur fournissant deux signaux vidéo représentant respectivement l'image à grand champ et l'image à petit champ, avec les réticules 19 et 20. Un traitement d'images, réalisé par le processeur 15, extrait une portion de l'image à grand champ, centrée sur les coordonnées (x, y) et calcule les valeurs de luminance de l'image à petit champ. Une méthode classique pour réaliser ce calcul est par exemple l'interpolation cubique.

Une sortie du dispositif 14 fournit une valeur G au processeur 15, pour définir le grandissement de l'image à petit champ. Ce grandissement peut être variable par exemple entre 1 et 4, pour un capteur matriciel de 512x512 cellules. Le processeur 15 joue donc le rôle d'un zoom électronique. Il permet de viser avec précision un point d'intérêt, ce qui permet au système de mesurer le gisement et le site de ce point d'intérêt avec plus de précision qu'avec la seule image à grand champ. Il remplace avantageusement un zoom optique puisqu'il permet d'utiliser une optique 10 plus simple et moins encombrante qu'un zoom optique, ou qu'une seconde voie optique comportant une seconde caméra munie d'un objectif à petit champ et à distance focale fixe. La résolution obtenue avec ce zoom électronique est suffisante, pour améliorer la précision de navigation, et la précision de tir de munitions non guidées, celles-ci étant tirées à des distances nettement inférieures à la distance de tir des munitions guidées.

Une autre sortie du processeur 15 fournit une valeur de site et de gisement au calculateur de tir et au calculateur de navigation que comporte l'avion, ces valeurs étant déduites des coordonnées (x, y).

Une sortie du dispositif 14 est reliée à une entrée de commande du processeur 15 et lui fournit un signal logique E lorsque l'utilisateur souhaite lancer un traitement d'images réalisant une écartométrie et une poursuite d'un point d'intérêt dans la suite des images à grand champ, pour stabiliser l'image à grand champ et l'image à petit champ, après que l'utilisateur ait réglé les réticules 19 et 20, sur un point d'intérêt. Le réticule mobile 19 n'est plus réglé manuellement mais par le processeur 15 , qui détermine périodiquement de nouvelles coordonnées (x, y) pour le réticule 19, et en déduit de nouvelles valeurs de site et de gisement. Ainsi le réticule mobile 19 poursuit automatiquement le point d'intérêt, et celui-ci est maintenu au centre du réticule fixe 20 dans l'image à petit champ.

La ligne de visée LVT du télémètre laser 13, est asservie de telle sorte qu'elle soit pointée sur le point d'intérêt qui est vu au centre de l'image à petit champ. La sortie, du processeur 15, qui fournit le site et le gisement est reliée à une entrée des diasporamètres 12. Un dispositif d'asservissement classique, non représenté, actionne les diasporamètres pour pointer la ligne de visée LVT dans la direction ayant ce site et ce gisement. Ainsi, le télémètre 13 vise automatiquement le point d'intérêt que l'utilisateur voit aux centres des réticules 19 et 20. Le traitement d'écartométrie et de poursuite détermine périodiquement une nouvelle valeur de site et de gisement, ce qui permet de stabiliser la ligne de visée LVT, en même temps que les réticules 15 et 20, sur le point d'intérêt.

Une sortie du dispositif 14 est reliée à une entrée du télémètre 13 pour permettre à l'utilisateur de déclencher le tir laser mesurant la distance entre le télémètre et le point d'intérêt. Une sortie du télémètre 13 fournit la valeur mesurée, au calculateur de tir et au calculateur de navigation, de l'avion.

Ce système permet l'acquisition et la localisation tridimensionnelle, d'un point d'intérêt, de jour, ou de nuit, ou par mauvaise visibilité, à condition que ce point soit situé dans le champ de la caméra. Ce point peut être un point de recalage pour la navigation ou un pont d'entrée de conduite de tir. Le point d'entrée est soit la cible dans le cas d'un tir à vue ; soit le point initial de tir, dans le cas d'un tir en aveugle ou à distance de sécurité. La précision du tir est améliorée , par rapport à une localisation bidimensionnelle, car la mesure de distance permet de déterminer l'altitude de la cible par rapport à un niveau de référence. Le calculateur de conduite de tir peut donc tenir compte de cette altitude.

A l'approche de chaque phase principale de sa mission : soit un recalage de navigation, soit une activation de conduite de tir, l'utilisateur règle la position du réticule 19 et du réticule 20 sur un point d'intérêt. Ce réglage peut être fait à vue, en opportunité ; ou bien en utilisant des informations fournies par le système de navigation de l'avion, préalablement renseigné lors de la préparation de la mission ; ou bien en utilisant des informations fournies par un traitement d'extraction de cible, réalisé par le processeur d'images 15.

Quand l'utilisateur voit le point d'intérêt au centre du réticule 20 de l'image à petit champ, il lance le traitement d'écartométrie et de recalage afin de stabiliser la ligne de visée du télémètre et le centre de l'image à petit champ, sur le point d'intérêt, afin de compenser des déplacements apparents dans l'image qui sont dus aux déplacements de l'avion, notamment son rapprochement vis-à-vis du point d'intérêt.

L'utilisateur commande ensuite l'acquisition des coordonnées tridimensionnelles du point d'intérêt en déclenchant le télémètre à laser. Le télémètre à laser fournit donc la distance alors que le processeur 15 fournit le site et le gisement du point d'intérêt. Cette opération de localisation tridimensionnelle peut être réalisée :
- soit en temps réel, de manière ponctuelle, à l'instant où l'utilisateur la commande ;
- soit en temps réel, de manière continue, par une répétition automatique, si la cible reste dans le champ de la caméra, ce qui est le cas généralement au cours d'une phase de tir ;
- soit en temps différé, les coordonnées tridimensionnelles étant déterminées a posteriori, à partir de valeurs de site, de gisement, et de distance, ayant été mémorisées pour libérer l'utilisateur sitôt qu'il a réglé les réticules sur un point d'intérêt.

Le système peut être appliqué aussi à la navigation à très basse altitude, l'image à grand champ étant utilisée pour conforter les options choisies, et le télémètre à laser pouvant être utilisé pour mesurer continuement la distance entre l'avion et les obstacles, par un balayage continuel dans un plan vertical, avec le débattement maximal.

Le processeur 15 est un processeur d'images de type classique. Sa programmation, pour réaliser les traitement d'images mentionnés précédemment, est à la portée de l'Homme de l'Art. Les traitements d'images pour : extraire et interpoler l'image à petit champ ; calculer le site et le gisement à partir des coordonnées du centre de l'image à petit champ à l'intérieur de l'image à grand champ ; et pour l'écartométrie et la poursuite d'un point d'intérêt ; sont des traitement classiques.

## Revendications (Revendications pour l'(les) Etat(s) contractant(s) suivant(s): DE, ES, GB, NL, SE)

1. Système optoélectronique d'aide aux missions aériennes d'attaque et de navigation, comportant :
- une caméra infrarouge (10, 11) à grand champ et à distance focale fixe ;
- des premiers moyens de visualisation (16) pour afficher une image à grand champ ;
- des moyens de traitement d'images (15) comportant des moyens pour fournir un signal représentant une image à petit champ, qui est une portion de l'image à grand champ, avec un grandissement réglable et une position réglable à l'intérieur de l'image à grand champ ;
- des seconds moyens de visualisation (17) pour afficher l'image à petit champ ;
est caractérisé en ce que sur l'image grand champ est superposé un réticule mobile (19) dont la position est réglable par les moyens de traitement d'image (14, 15) et est centrée sur l'image petit champ, et en ce que le centre de l'image petit champ indique la direction de la ligne de visée (LVT) d'un télémètre à laser (13).

2. Système selon la revendication 1, caractérisé en ce que, les moyens de traitement d'images (15) comportent des moyens pour déterminer le site et le gisement d'un point d'intérêt visible au centre de l'image à petit champ, en fonction de la position réglée par les moyens (14).

3. Système selon la revendications 2, caractérisé en ce que, pour déterminer la distance entre le système et un point d'intérêt, il comporte, outre le télémètre à laser, (13) un dispositif de pointage (12) ayant un débattement couvrant tout le champ de la caméra, et dont la ligne de visée (LVT) est asservie en fonction du site et du gisement déterminés par les moyens de traitement d'images (15).

4. Système selon la revendication 3, caractérisé en ce que, pour stabiliser la visualisation d'un point d'intérêt et la ligne de visée (LVT) du télémètre (13) sur ce point d'intérêt, les moyens de traitement d'images (15) comportent en outre des moyens pour poursuivre un point d'intérêt dans l'image à grand champ.

## Revendications (Revendications pour l'(les) Etat(s) contractant(s) suivant(s): BE, IT)

1. Système optoélectronique d'aide aux missions aériennes d'attaque et de navigation, comportant :
- une caméra infrarouge (10, 11) à grand champ et à distance focale fixe ;
- des premiers moyens de visualisation (16) pour afficher une image à grand champ ;
caractérisé en qu'il comporte en outre :
- des moyens de traitement d'images (15) comportant des moyens pour fournir un signal représentant une image à petit champ, qui est une portion de l'image à grand champ, avec un grandissement réglable et une position réglable à l'intérieur de l'image à grand champ ;
- des moyens (14) pour régler manuellement le grandissement et la position ;
- des seconds moyens de visualisation (17) pour afficher l'image à petit champ.

2. Système selon la revendication 1, caractérisé en ce que, les moyens de traitement d'images (15) comportent des moyens pour déterminer le site et le gisement d'un point d'intérêt qui visible au centre de l'image à petit champ, en fonction de la position réglée par les moyens (14) pour régler.

3. Système selon la revendications 2, caractérisé en ce que, pour déterminer la distance entre le système et un point d'intérêt, il comporte en outre :
- un télémètre à laser (13) ;
- un dispositif de pointage (12) ayant un débattement couvrant tout le champ de la caméra, et dont la ligne de visée (LVT) est asservie en fonction du site et du gisement déterminés par les moyens de traitement d'images (15).

4. Système selon la revendication 3, caractérisé en ce que, pour stabiliser la visualisation d'un point d'intérêt et la ligne de visée (LVT) du télémètre (13) sur ce point d'intérêt, les moyens de traitement d'images (15) comportent en outre des moyens pour poursuivre un point d'intérêt dans l'image à grand champ.

## Patentansprüche (Patentansprüche für folgende(n) Vertragsstaat(en): DE, ES, GB, NL, SE)

1. Optoelektronisches Hilfssystem für Luftangriffseinsätze und die Flugnavigation, mit:
- einer Infrarotkamera (10, 11) mit weitem Bildfeld und fester Brennweite;
- ersten Anzeigemitteln (16) zur Anzeige eines Bildes mit weitem Bildfeld;
- Bildverarbeitungsmitteln (15), die Mittel zur Lieferung eines Signals enthalten, das ein Bild mit engem Bildfeld darstellt, das ein Teil des Bildes mit weitem Bildfeld mit einstellbarer Vergrößerung und einstellbarer Position im Inneren des Bildes mit weitem Bildfeld ist;
- zweiten Anzeigemitteln (17) zur Anzeige des Bildes mit engem Bildfeld;
dadurch gekennzeichnet, daß dem Bild mit weitem Bildfeld ein bewegliches Fadenkreuz (19) überlagert ist, dessen Position durch die Bildverarbeitungsmittel (14, 15) einstellbar ist und das auf das Bild mit engem Bildfeld zentriert ist, und daß der Mittelpunkt des Bildes mit engem Bildfeld die Richtung der Visierlinie (LVT) eines Laser-Entfernungsmessers (13) angibt.

2. System nach Anspruch 1, dadurch gekennzeichnet, daß die Bildverarbeitungsmittel (15) Mittel enthalten, um den Höhenwinkel und den Seitenwinkel eines im Mittelpunkt des Bildes mit engem Bildfeld sichtbaren interessierenden Punktes in Abhängigkeit von der durch die Mittel (14) eingestellten Position zu bestimmen.

3. System nach Anspruch 2, dadurch gekennzeichnet, daß es zur Bestimmung der Entfernung zwischen dem System und einem interessierenden Punkt außer dem Laser-Entfernungsmesser (13) eine Zielvorrichtung (12) enthält, die einen das ganze Bildfeld der Kamera überdeckenden Auslenkungsbereich hat und deren Visierlinie (LVT) in Abhängigkeit von dem Höhenwinkel und dem Seitenwinkel, die von den Bildverarbeitungsmitteln (15) bestimmt werden, nachgeführt wird.

4. System nach Anspruch 3, dadurch gekennzeichnet, daß zur Stabilisierung der Anzeige eines interessierenden Punktes und der Visierlinie (LVT) des Entfernungsmessers (13) auf diesen interessierenden Punkt die Bildverarbeitungsmittel (15) außerdem Mittel zur Verfolgung eines interessierenden Punktes in dem Bild mit weitem Bildfeld enthalten.

## Patentansprüche (Patentansprüche für folgende(n) Vertragsstaat(en): BE, IT)

1. Optoelektronisches Hilfssystem für Luftangriffseinsätze und die Flugnavigation, mit:
- einer Infrarotkamera (10, 11) mit weitem Bildfeld und fester Brennweite;
- ersten Anzeigemitteln (16) zur Anzeige eines Bildes mit weitem Bildfeld;
dadurch gekennzeichnet, daß es außerdem enthält:
- Bildverarbeitungsmittel (15), die Mittel zur Lieferung eines Signals enthalten, das ein Bild mit engem Bildfeld darstellt, das ein Teil des Bildes mit weitem Bildfeld mit einstellbarer Vergrößerung und einstellbarer Position im Inneren des Bildes mit weitem Bildfeld ist;
- Mittel (14) zur Handeinstellung der Vergrößerung und der Position;
- zweite Anzeigemittel (17) zur Anzeige des Bildes mit engem Bildfeld.

2. System nach Anspruch 1, dadurch gekennzeichnet, daß die Bildverarbeitungsmittel (15) Mittel enthalten, um den Höhenwinkel und den Seitenwinkel eines im Mittelpunkt des Bildes mit engem Bildfeld sichtbaren interessierenden Punktes in Abhängigkeit von der durch die Mittel (14) eingestellten Position zu bestimmen.

3. System nach Anspruch 2, dadurch gekennzeichnet, daß es zur Bestimmung der Entfernung zwischen dem System und einem interessierenden Punkt außerdem enthält:
- einen Laser-Entfernungsmesser (13);
- eine Zielvorrichtung (12), die einen das ganze Bildfeld der Kamera überdeckenden Auslenkungsbereich hat und deren Visierlinie (LVT) in Abhängigkeit von dem Höhenwinkel und dem Seitenwinkel, die von den Bildverarbeitungsmitteln (15) bestimmt werden, nachgeführt wird.

4. System nach Anspruch 3, dadurch gekennzeichnet, daß zur Stabilisierung der Anzeige eines interessierenden Punktes und der Visierlinie (LVT) des Entfernungsmessers (13) auf diesen interessierenden Punkt die Bildverarbeitungsmittel (15) außerdem Mittel zur Verfolgung eines interessierenden Punktes in dem Bild mit weitem Bildfeld enthalten.

## Claims (Claims for the following Contracting State(s): DE, ES, GB, NL, SE)

1. Optoelectronic system for aid with air attack and navigation missions, including:
- a wide-field infrared camera (10, 11) with fixed focal length;
- first visual display means (16) for displaying a wide-field image;
- image processing means (15) including means for supplying a signal representing a narrow-field image, which is a portion of the wide-field image, with an adjustable magnification and an adjustable position within the wide-field image;
- second visual display means (17) for displaying the narrow-field image;
is characterized in that, on the wide-field image, a mobile reticle (19) is superimposed, the position of which is adjustable by the image processing means (14, 15) and is centred on the narrow-field image, and in that the centre of the narrow-field image indicates the direction of the sight line (LVT) of a laser range finder (13).

2. System according to Claim 1, characterized in that the image processing means (15) include means for determining the elevation and the azimuth of a point of interest visible at the centre of the narrow-field image, depending on the position set by the means (14).

3. System according to Claim 2, characterized in that, in order to determine the distance between the system and a point of interest, it includes, in addition to the laser range finder (13), an aiming device (12) having a range of movement covering the whole field of the camera, and the sight line (LVT) of which is slaved as a function of the elevation and of the azimuth which are determined by the image processing means (15).

4. System according to Claim 3, characterized in that, in order to stabilize the visual display of a point of interest and the sight line (LVT) of the range finder (13) onto this point of interest, the image processing means (15) further include means for tracking a point of interest in the wide-field image.

## Claims (Claims for the following Contracting State(s): BE, IT)

1. Optoelectronic system for aid with air attack and navigation missions, including:
- a wide-field infrared camera (10, 11) with fixed focal length;
- first visual display means (16) for displaying a wide-field image;
characterized in that it further includes:
- image processing means (15) including means for supplying a signal representing a narrow-field image, which is a portion of the wide-field image, with an adjustable magnification and an adjustable position within the wide-field image;
- means (14) for manually adjusting the magnification and the position;
- second visual display means (17) for displaying the narrow-field image.

2. System according to Claim 1, characterized in that the image processing means (15) include means for determining the elevation and the azimuth of a point of interest visible at the centre of the narrow-field image, depending on the position set by the adjustment means (14).

3. System according to Claim 2, characterized in that, in order to determine the distance between the system and a point of interest it further includes:
- a laser range finder (13);
- an aiming device (12) having a range of movement covering the whole field of the camera, and the sight line (LVT) of which is slaved as a function of the elevation and of the azimuth which are determined by the image processing means (15).

4. System according to Claim 3, characterized in that, in order to stabilize the visual display of a point of interest and the sight line (LVT) of the range finder (13) onto this point of interest, the image processing means (15) further include means for tracking a point of interest in the wide-field image.
